# EUROPEAN PATENT SPECIFICATION

(11) **EP 1 950 772 B1**
(45) Date of publication and mention of the grant of the patent: **26.10.2016**
(21) Application number: 08100725.4
(22) Date of filing: 22.01.2008
(51) Int. Cl.: G01D 5/20, G01D 5/24, G01D 5/241, H01F 17/04, G06F 3/0354, G06F 3/046, H01G 5/16, H01F 1/26, H01F 3/08, H01F 41/02

(54) **Magnetic core and position indicator**
Magnetkern und Positionsanzeiger
Noyau magnétique et indicateur de position

(30) Priority: 26.01.2007 JP 2007016648
(43) Date of publication of application: 30.07.2008
(73) Proprietor: Wacom Co., Ltd., Saitama 349-1148 (JP)
(72) Inventor: Fukushima, Yasuyuki, Kitakatsushika-Gun Saitama 349-1117 (JP); Fujitsuka, Hiroyuki, Kitakatsushika-Gun Saitama 340-0203 (JP)
(74) Representative: Richardt Patentanwälte PartG mbB

(56) References cited:
- EP-A2- 1 154 447
- JP-A- 2001 068 324
- JP-A- 2004 071 845
- US-A- 5 206 785
- US-A1- 2004 183 643
- US-A1- 2005 028 889

## Description

### Background of the Invention

### Field of the Invention:

The invention relates to a position indicator.

A position indicator generally includes a resonant coil for detecting a position provided in the vicinity of the tip of a pen (i.e., see Japanese Unexamined Patent Application Publication No. 2001-319831). However, the core of the position indicator, around which the resonance coil is wound, may be damaged due to the impact when the indicator drops or falls.

Specifically, since the core utilized in the related-art magnetic apparatus is formed of soft magnetic metal, a molded product thereof is usually fragile against impact. In the related-art position indicator, a buffer material is usually provided around the resonant coil, which results in an increase in the number of components and in a diameter of the core of the position indicator.

An increased number of position indicators have now been utilized in compact mobile information terminals such as PDAs (Personal Digital Assistant) used as a device for indicating positions. The indicator is preferably thinner especially when used with the PDA. Specifically, the position indicator needs to be thin enough for being housed in the PDA. It is possible to form an indicator having a small diameter with materials used in the related-art; however, the strength of the material is decreased in inverse proportion to the thickness thereof. Thus, the position indicator may not be strong enough to withstand the dropped impact or the force applied by hand, thereby causing the position indicator to bend or the core thereof to be broken.

Japanese Unexamined Patent Application Publication No. 2004-71845 discloses one of the techniques to produce a core of a magnetic device such as a thin position indicator having an increased strength. In this technique, a flat soft magnetic metal powder is mixed with an organic binder to form a core of the magnetic device by injection molding. The disclosed technique increases the molding flexibility. The core formed by this technique also has the strength against impact due to the resin mixed therein.

An example of a position indicator can be found in patent documents US 5 206 785 and EP 1154 447.

### Summary of the Invention

Provided is a position indicator according to independent claim 1. Further embodiments are described in the dependent claims.

The core for the position indicator provides a high shock resistance when the indicator drops or falls. Specifically, the probability of damaging the core, around which the resonant coil for the position indicator is wound, may be lowered. Thus, the position indicator can be simply configured without having a buffer material around the core, and the shaft diameter of the position indicator can be reduced.

The position indicator can be provided for a digitizer that is configured to generate a response to an alternating field based on an alternating field received from the digitizer, the position indicator includes a core formed of a composition obtained by mixing a soft magnetic metal powder with a resin binder, and at least one coil provided around the core configured to generate the response to the alternating field based on the alternating field received from the digitizer.

According to an embodiment of the invention, the position indicator includes a resonant coil provided around the core configured to be excited based on the alternating field received from the coordinate input device, such a the digitizer and to generate the response to the alternating field, a variable capacitance configured to detect a pen pressure when the coordinate input device is pressed, and a control circuit configured to control the excitation of the resonant coil based on a capacitance value of the variable capacitance.

The soft magnetic metal powder of the position indicator may include 25 to 65 vol% of a flat soft magnetic metal powder employing Fe as a master alloy.

### Brief description of the Drawings

- FIG. 1: is a configuration diagram of a position indicator utilizing an embodiment of the invention.
- FIG. 2: is a block diagram illustrating one example of a circuit diagram of the position indicator utilizing the embodiment of the invention.
- FIG. 3: is a schematic diagram illustrating a coordinate input device having the position indicator utilizing the embodiment of the invention.
- FIG. 4: is a schematic diagram illustrating a device used for producing a magnetic core of the position indicator utilizing the embodiment of the invention.
- FIG. 5: is an external view illustrating one example of the magnetic core formed by the device.

### Description of the Preferred Embodiments

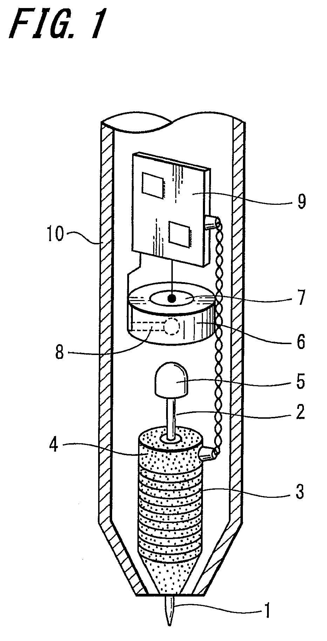

An embodiment of the invention is described as follow with reference to accompanied drawings. FIG. 1 shows a configuration of a position indicator utilizing an embodiment of the invention.

As can be seen from FIG. 1, a core body 2 having a pen tip 1 at one end thereof is arranged so as to penetrate through a magnetic core 4 around which a conductive line as a position detecting coil 3 is wound according to the position indicator of the embodiment. The magnetic core 4 is injection molded with a composition obtained by mixing soft magnetic metal powder with an organic binder. The detecting sensitivity of the position detecting coil 3 is improved by having the coil wound around the magnetic core 4.

Further, a conductive elastic member 5 having a dome shape is provided at the other end of the core body 2. Moreover, a dielectric 6 having a flat shape is provided in the vicinity of the conductive elastic member 5. An electrode 7 is provided on a first surface of the dielectric 6 while a lead electrode 8 is provided on a second surface thereof. The dielectric 6 is arranged such that the second surface thereof faces the conductive elastic member 5.

The lead electrode 8 on the other surface of the dielectric 6 is provided to the one surface of the dielectric 6 by having the lead electrode 8 extended from an approximately center of the other surface of the dielectric 6 via the side surface thereof. Lead lines from the electrodes 7 and 8 are connected to a circuit board 9. Lead lines from the position detecting coil 3 are connected to the circuit board 9. The resulting component configured as described above is enclosed in an outer housing 10 to form a position indicator.

According to the position indicator of this embodiment, when pen pressure is applied to the pen tip 1, the conductive elastic member 5 provided at the other end of the core body 2 is pressed against the second surface of the dielectric 6 and hence the peak of the conductive elastic member 5 is flattened, thereby increasing a contact area of the second surface of the dielectric 6. A capacitance value obtained between the electrode 7 and the lead electrode 8 changes with a size of the contact area of the second surface of the dielectric 6 while the peak of the conductive elastic member 5 is in contact with the lead electrode 8.

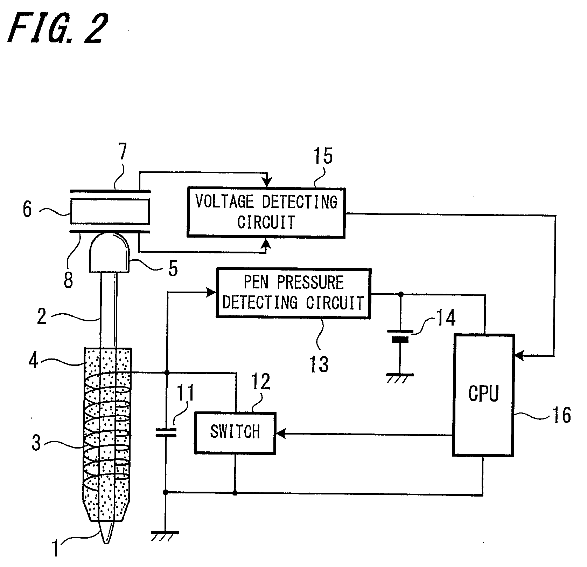

In this manner, a value of the pen pressure applied to the pen tip 1 is detected as a change in the capacitance value between the electrode 7 and the lead electrode 8. The change in the capacitance value is detected and processed, for example, by circuits shown in FIG. 2 that are provided on the circuit board 9. FIG. 2 illustrates a circuit configuration for controlling a signal based on the value of the detected pen pressure transmitted from the position detecting coil 3.

As shown in FIG. 2, the core body 2 has the pen tip 1 at one end thereof so as to penetrate through the magnetic core 4 around which the conductive line as the position detecting coil 3 is wound, the conductive elastic member 5 at the other end of the core body 2, and the dielectric 6 having the electrode 7 and lead electrode 8 that is placed in the vicinity of the conductive elastic member 5. In FIG. 2, a resonant capacitor 11 are arranged in parallel with and connected to the position detecting coil 3. A switch 12 is connected to the both ends of the resonant capacitor 11 and is located therebetween. One end of the position detecting coil 3 is connected to a storage battery 14 via a voltage detecting circuit 13.

The lead lines respectively extending from the electrode 7 and the lead electrode 8 are connected to a pen pressure detecting circuit 15, where the change in the capacitance value between the electrode 7 and the lead electrode 8 is detected. The change in the capacitance value obtained is detected as a predetermined value of the pen pressure applied by pressing the core body 2 against a digitizer. The resulting value of the pen pressure is supplied to a Central Processing Unit (CPU) 16. A signal generated from the CPU 16 is supplied to the switch 12, which is switched on or off to transmit a desirable signal including the value of the pen pressure.

Power charged in the storage battery 14 is supplied to the CPU 16 as driving power and is also supplied to components of the position indicator. Thus, since the driving power is supplied to the position indicator of this embodiment via the position detecting coil 3 without power supply via a fixed line or a dry battery, thereby providing a position indicator that has excellent properties and is easy to be handled. This power supply also enables the position indicator of the embodiment to carry out more powerful transmission.

Further, according to the embodiment, a variable capacitance utilized as a pen pressure detector has a simple configuration, only including the following two components; that is, the core body 2 having the dome shaped conductive elastic member 5 located at the other end thereof, and the flat dielectric 6 having the electrode 7 on the first surface and the lead electrode 8 on the second surface thereof. Examples of the conductive elastic member 5 include silicon conductive rubber and pressure sensitive conductive rubber.

In this embodiment, a soft magnetic metal powder is allowed to mix with an organic resin binder, and the resulting composition is then formed, for example, by injection molding to produce the magnetic core 4. The material used is easier to form than the related-art soft magnetic metal. In addition, since the thus formed magnetic core 4 exhibits excellent shock resistance in comparison to that made of the related-art soft magnetic metal, probability of damaging the core, around which the resonant coil for the position indicator is wound, may be lowered. The position indicator of the embodiment can thus be simply configured without having a buffer material around the core, and the shaft diameter of the position indicator can be reduced.

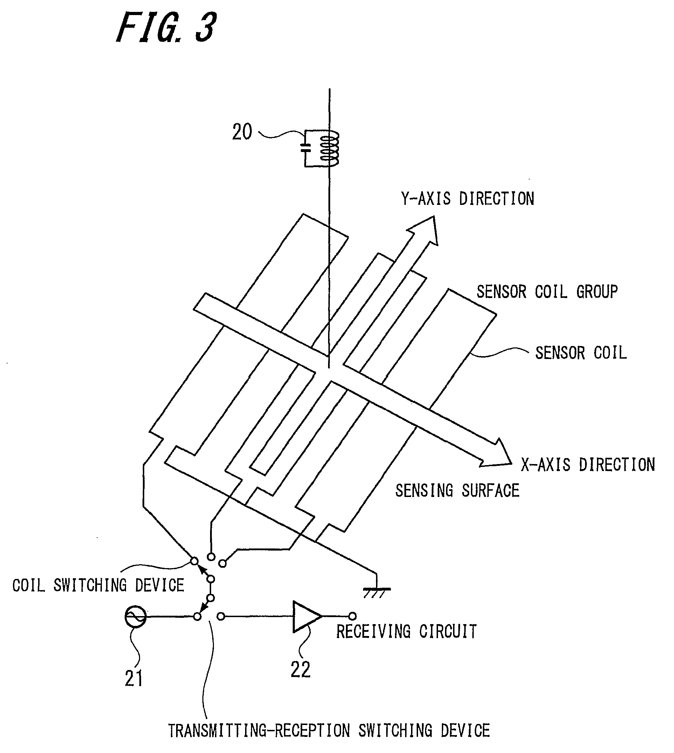

FIG. 3 is a schematic configuration illustrating a coordinate input device provided with a cordless position indicator 20 of an embodiment of the invention. The coordinate input device employs an electromagnetic transmission-reception system and hence a plurality of sensor coil groups is placed on the coordinate input device in parallel with X-axis and Y-axis directions.

In the coordinate input device with the electromagnetic transmission-reception system, current is caused to flow in the sensor coil in transmission, which is then allowed to transmit an alternating field. The transmitted alternating field excites a coil or a resonant circuit in the position indicator 20, thereby causing the position indicator 20 to generate a response to the alternating field. The transmission of the alternating filed is stopped to switch the sensor coil in reception, thereby causing to the sensor coil to receive the response to the alternating field. Intensity distribution of the received signal obtained from each of the sensor coil is then subject to a signal analysis, thereby computing a coordinate of the position indicator 20.

An example of the current caused to flow in the sensor coil in transmission includes a high-frequency signal. A suitable high-frequency signal generator 21 is employed to generate the high-frequency signal. The coordinate input device further includes a coil switching device selecting each of the sensor coils for transmitting the high-frequency signal or receiving the signal. The coordinate input device still further includes a transmission-reception switching device for switching a transmission or reception state of each sensor coil. The coil switching device and the transmission-reception switching device may either be provided independently or in combination. The received signal is sent to a signal analyzing unit (not shown) via the receiving circuit 22, thereby computing a coordinate of the position indicator 20.

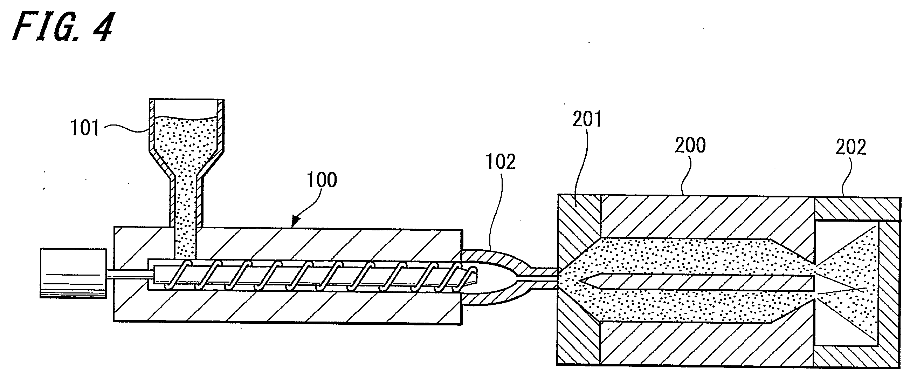

FIG. 4 is a schematic configuration illustrating a configuration of a device used for forming the magnetic core 4 by injection molding. As shown in FIG. 4, the composition obtained by mixing the soft magnetic metal powder in the binder such as an organic resin is injected from a hopper 101 to an injector 100. The injector 100 includes a heat source that melts the injected composition, and the obtained composition is then injected from an injecting nozzle 102 into a mold 200.

The mold 200 is formed so as to correspond along an inner surface of the outer housing 10. One end of the mold 200 is connected to the injection nozzle 102 via a connecting unit 201 while the other end of a discharging unit 202 having a void into which part of the melted composition injected is discharged. The melted composition injected from the injecting nozzle 102 is filled in the mold 200 and part of the composition injected is discharged in the discharging unit 202.

The aforementioned soft magnetic metal powder includes 25 to 65 vol% of the flat soft magnetic metal powder employing Fe as a master alloy. The core made of this composition exhibits excellent strength and shock resistance so that the core may not easily be broken. Since the composition made of the soft magnetic metal powder is solidified using a resin binder, the magnetic permeability of the composition is significantly lowered. However, the magnetic permeability of the composition can be improved by causing the flat soft magnetic metal powder to align in a predetermined direction using the aforementioned injection compression molding device.

Specifically, the formed magnetic core 4 is solidified with the soft magnetic metal powder thereof being aligned approximately in a predetermined direction, thereby obtaining a product having excellent properties as a magnetic core. Further, since the shape of the magnetic core 4 corresponds approximately to a shape of the inner surface of the outer housing 10, the tip of the magnetic core 4 can be located closely to the pen tip 1 of the position indicator of the embodiment. Moreover, since the magnetic field generated from the detectors can quickly be detected, accuracy in the position detection can also be improved.

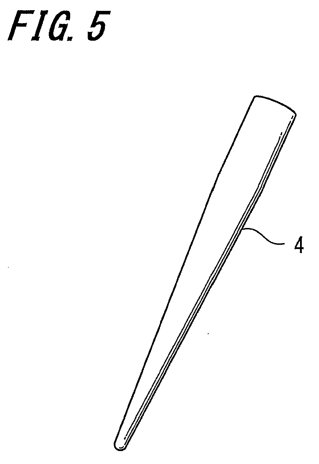

Accordingly, the core 4 formed by injection molding exhibits excellent shock resistance in comparison to that made of the soft magnetic metal by the related-art technique. Consequently, the probability of damaging the core, around which the resonant coil for the position indicator is wound, may be lowered. Thus, the position indicator of the embodiment can thus be simply configured without having a buffer material around the core, and the shaft diameter of the position indicator can be reduced. FIG. 5 is an external view illustrating the magnetic core 4 formed as described above.

The invention is not limited to the embodiments described above, and various modifications and alterations may be made without departing from the scope of the invention as defined by the following claims.

It should be understood by those skilled in the art that various modifications, combinations, sub-combinations and alterations may occur depending on design requirements and other factors insofar as they are within the scope of the appended claims .

## Claims

1. A position indicator configured to generate a response to an electromagnetic field based on an electromagnetic field received from a coordinate input device, the position indicator comprising:
- an elongated injection molded magnetic core (4) formed from a mixture of a flat soft magnetic powder and a resin binder, the flat soft magnetic metal powder being aligned approximately in a predetermined direction,; the elongated magnetic core being injection molded to comprise a shape which is tapered towards a tip of the elongated magnetic core;
- the shape of the elongated injection molded magnetic core (4) corresponding approximately to the shape of the inner surface of an outer housing (10) of the position indicator, the elongated magnetic core being located in the outer housing; the tip of the magnetic core (4) being located for being closely to a pen tip (1) of the position indicator and
- at least one coil (3) provided around the elongated injection molded magnetic core configured to generate the response to the electromagnetic field based on the electromagnetic field received from the coordinate input device.

2. A position indicator according to claim 1, wherein the position indicator has a pen shape and the core having the coil therearound is provided in the vicinity of a tip of the pen shape.

3. A position indicator according to claim 1, wherein the position indicator has a pen shape, and the core having the coil therearound is directly provided inside an outer housing (10) having the pen shape.

4. A position indicator according to claim 1, further comprising a core body (2) having the tip of the pen shape at one end thereof that is provided to penetrate through the core having the coil therearound, wherein the position indicator has a pen shape.

5. A position indicator according to any one of claims 1 to 4, further comprising:
the resonant coil (3) provided around the core configured to be excited based on the electromagnetic field received from the coordinate input device and to generate the response to the electromagnetic field;
- a variable capacitance (5, 6) configured to detect a pen pressure when a part of the position indicator is pressed; and
- a control circuit (12, 13, 14, 15, 16) configured to control the excitation of the resonant coil based on a capacitance value of the variable capacitance.

## Patentansprüche

1. Positionsanzeiger, der zum Erzeugen einer Antwort auf ein elektromagnetisches Feld auf Basis eines von einer Koordinateneingabevorrichtung erhaltenen elektromagnetischen Felds konfiguriert ist, wobei der Positionsanzeiger Folgendes aufweist:
- einen länglichen spritzgegossenen magnetischen Kern(4), der aus einem Gemisch aus einem flachen weichen magnetischen Pulver und einem Harzbindemittel hergestellt wurde, wobei das flache weiche magnetische Metallpulver ungefähr in einer vorbestimmten Richtung ausgerichtet ist, wobei der längliche magnetische Kern spritzgegossen ist, so dass er eine Form aufweist, die sich zu einer Spitze des länglichen magnetischen Kerns hin verjüngt;
- wobei die Form des länglichen spritzgegossenen magnetischen Kerns (4) etwa der Form der Innenfläche eines äußeren Gehäuses (10) des Positionsanzeigers entspricht, wobei der längliche magnetische Kern in dem äußeren Gehäuse liegt; wobei die Spitze des magnetischen Kerns (4) so liegt, dass sie nahe an einer Stiftspitze (1) des Positionsanzeigers ist, und
- wenigstens eine um den länglichen spritzgegossenen magnetischen Kern herum bereitgestellte Spule (3), die zum Erzeugen der Antwort auf das elektromagnetische Feld auf Basis des von der Koordinateneingabevorrichtung empfangenen elektromagnetischen Felds konfiguriert ist.

2. Positionsanzeiger nach Anspruch 1, wobei der Positionsanzeiger eine Stiftform hat und der Kern mit der Spule um ihn herum in der Nähe einer Spitze der Stiftform bereitgestellt ist.

3. Positionsanzeiger nach Anspruch 1, wobei der Positionsanzeiger eine Stiftform hat und der Kern mit der Spule um ihn herum direkt im Inneren eines äußeren Gehäuses (10), das die Stiftform hat, bereitgestellt ist.

4. Positionsanzeiger nach Anspruch 1, der ferner einen Kernkörper (2), an dessen einem Ende sich die Spitze der Stiftform befindet, aufweist, der bereitgestellt ist, um den Kern mit der Spule um ihn herum zu durchdringen, wobei der Positionsanzeiger eine Stiftform hat.

5. Positionsanzeiger nach einem der Ansprüche 1 bis 4, der ferner Folgendes aufweist:
- die um den Kern herum bereitgestellte Resonanzspule (3), die konfiguriert ist, um auf Basis des von der Koordinateneingabevorrichtung empfangenen elektromagnetischen Felds erregt zu werden und die Antwort an das elektromagnetische Feld zu erzeugen;
- eine veränderliche Kapazität (5, 6), die konfiguriert ist, um einen Stiftdruck zu erkennen, wenn ein Teil des Positionsanzeigers gedrückt wird; und
- eine Regelschaltung (12, 13, 14, 15, 16), die zum Regeln der Erregung der Resonanzspule auf Basis eines Kapazitätswerts der veränderlichen Kapazität konfiguriert ist.

## Revendications

1. Indicateur de position configuré pour générer une réponse à un champ électromagnétique sur la base d'un champ électromagnétique reçu d'un dispositif d'entrée de coordonnées, l'indicateur de position comprenant :
- un noyau magnétique (4) allongé moulé par injection formé à partir d'un mélange d'une poudre magnétique molle à particules plates et d'un liant à base de résine, la poudre métallique magnétique molle à particules plates étant approximativement alignée avec une direction prédéterminée ;
le noyau magnétique allongé étant moulé par injection afin de comporter une forme qui est fuselée vers une pointe du noyau magnétique allongé ;
- la forme du noyau magnétique (4) allongé moulé par injection correspondant approximativement à la forme de la surface intérieure d'un boîtier externe (10) de l'indicateur de position, le noyau magnétique allongé étant situé dans le boîtier externe ; la pointe du noyau magnétique (4) étant située de façon à être proche d'une pointe de stylo (1) de l'indicateur de position, et
- au moins une bobine (3) mise en place autour du noyau magnétique allongé moulé par injection configurée pour générer la réponse au champ électromagnétique sur la base du champ électromagnétique reçu du dispositif d'entrée de coordonnées.

2. Indicateur de position selon la revendication 1, où l'indicateur de position a la forme d'un stylo et le noyau ayant la bobine autour de lui est mis en place au voisinage d'une pointe de la forme en stylo.

3. Indicateur de position selon la revendication 1, où l'indicateur de position a une forme en stylo, et le noyau ayant la bobine autour de lui est mis en place directement à l'intérieur d'un boîtier externe (10) ayant la forme en stylo.

4. Indicateur de position selon la revendication 1, comprenant en outre un corps de noyau (2), ayant la pointe de la forme en stylo à une de ses extrémités, qui est mis en place pour pénétrer à travers le noyau ayant la bobine autour de lui, où l'indicateur de position a une forme en stylo.

5. Indicateur de position selon l'une quelconque des revendications 1 à 4, comprenant en outre :
- la bobine de résonance (3) mise en place autour du noyau configurée pour être excitée sur la base du champ électromagnétique reçu du dispositif d'entrée de coordonnées, et pour
générer la réponse au champ électromagnétique ;
- une capacité variable (5, 6) configurée pour détecter une pression de stylo lorsqu'une partie de l'indicateur de position est pressée, et
- un circuit de contrôle (12, 13, 14, 15, 16) configuré pour contrôler l'excitation de la bobine de résonance sur la base d'une valeur de capacité de la capacité variable.
